# DEMANDE DE BREVET EUROPEEN

(11) **EP 3 672 002 A1**
(43) Date de publication de la demande: **24.06.2020**
(21) Numéro de dépôt: 18215109.2
(22) Date de dépôt: 21.12.2018
(51) Int. Cl.: H02G 3/16, H01R 9/24, H02B 1/40

(54) **COFFRET ELECTRIQUE**

(71) Demandeur: IZYX Systems, 67720 Weyersheim (FR)
(72) Inventeur: BURY, Jean, 67170 Brumath (FR); BROCHOT, Fabien, 44300 Nantes (FR)
(74) Mandataire: Cabinet Bleger-Rhein-Poupon

(57) **Abrégé**

L'invention concerne un coffret électrique comportant un boîtier électrique, qui est destiné à contenir au moins un module électrique, et qui comporte, intérieurement, d'une part, au moins un bornier de connexion électrique (9) qui comporte, chacun, au moins une borne de connexion électrique (90) et, d'autre part, au moins un moyen de guidage (11) d'au moins un fil électrique en direction de la borne de connexion électrique (90) ou de l'une (90) des bornes de connexion électrique (90) d'un tel bornier de connexion électrique (9).

## Description

La présente invention a trait à un coffret électrique.

Cette invention concerne le domaine de la fabrication des coffrets électriques destinés à être raccordés, d'une part, à un câble électrique d'un réseau électrique d'alimentation en énergie électrique, ceci pour son alimentation en énergie électrique et, d'autre part, à des câbles électriques d'une installation électrique, notamment domestique ou industrielle, ceci pour l'alimentation en énergie électrique de prises électriques ou de dispositifs électriques. Un tel coffret électrique comporte, intérieurement, des modules électriques (notamment des transformateurs) qui sont alimentés en énergie électrique par le réseau électrique d'alimentation et qui alimentent en énergie électrique les prises électriques ou les dispositifs électriques.

Un tel coffret électrique adopte la forme d'un boîtier comportant un fond qui peut comporter au moins un perçage destiné à recevoir un organe de fixation pour la fixation de ce coffret sur une structure, notamment un mur. La présence d'un tel perçage nécessite, tout d'abord, de positionner le coffret de manière appropriée par rapport à la structure, pour, ensuite, marquer la structure. Le coffret est, alors, retiré de la structure et il est procédé au perçage de cette structure au niveau du marquage. Par la suite, le coffret est, à nouveau, positionné sur la structure ceci en vue de mettre en place le ou les organes de fixation dans le ou les perçages.

Ce type de coffret présente un certain nombre d'inconvénients. Tout d'abord, avant la fixation de ce coffret sur la structure, il convient de positionner ce coffret par rapport à cette structure en vue de marquer cette structure. Le positionnement approprié du coffret par rapport à la structure nécessite l'utilisation d'un outil (usuellement un niveau à bulle) dont la manipulation, conjointement avec celle du coffret et d'un marqueur, s'avère peu aisée. Cet inconvénient est amplifié avec le poids du coffret, en particulier lorsque ce coffret contient intérieurement une pluralité de modules électriques.

Un autre type de coffret électrique comporte un fond dépourvu de perçage. Pour un tel coffret, il est nécessaire de procéder à un perçage de ce fond ce qui, en plus des inconvénients mentionnés ci-dessus, nécessite encore un perçage du boîtier qui constitue une intervention additionnelle.

Un tel coffret électrique comporte un boîtier électrique, qui est destiné à contenir au moins un module électrique, et qui comporte, intérieurement, au moins un bornier de connexion électrique. Un tel bornier de connexion électrique comporte, chacun, d'une part, au moins une borne de connexion électrique chacune destinée à recevoir au moins un fil électrique et, d'autre part, au moins un organe d'immobilisation, chacun associé à une telle borne de connexion électrique, et chacun conçu pour immobiliser au moins un fil électrique à l'intérieur d'une telle borne de connexion électrique. Un tel organe d'immobilisation est, usuellement, constitué par une vis. Un tel organe d'immobilisation doit être accessible et doit pouvoir être actionné par un opérateur qui intervient à l'intérieur du coffret électrique de sorte que la vis d'un tel organe d'immobilisation s'étend selon un axe horizontal. Dans un pareil cas, la borne de connexion électrique s'étend selon un axe vertical de sorte que ledit au moins un fil électrique doit être engagé à l'intérieur d'une telle borne de connexion électrique par le dessous de cette borne de connexion électrique et selon un mouvement ascendant. Une telle opération s'avère fastidieuse et malaisée. Cet inconvénient est amplifié lorsque le coffret électrique est encombré par un nombre important de fils électriques.

La présente invention se veut de remédier aux inconvénients des coffrets électriques de l'état de la technique.

A cet effet, l'invention concerne un coffret électrique comportant un boîtier électrique, qui est destiné à contenir au moins un module électrique, et qui comporte, intérieurement, d'une part, au moins un bornier de connexion électrique qui comporte, chacun, au moins une borne de connexion électrique et, d'autre part, au moins un moyen de guidage d'au moins un fil électrique en direction de la borne de connexion électrique ou de l'une des bornes de connexion électrique d'un tel bornier de connexion électrique.

Une autre caractéristique concerne le fait que le boîtier électrique comporte au moins un ensemble qui comporte, chacun, d'une part, ledit au moins un bornier de connexion électrique ou au moins l'un desdits borniers de connexion électrique et, d'autre part, au moins un élément, qui est, chacun, associé à un tel bornier de connexion électrique, et qui comporte, chacun, ledit au moins un moyen de guidage ou au moins l'un desdits moyens de guidage d'au moins un fil électrique en direction de la borne de connexion électrique ou de l'une des bornes de connexion électrique d'un tel bornier de connexion électrique.

Une caractéristique additionnelle concerne le fait que, d'une part, ledit au moins un bornier de connexion électrique comporte, chacun, au moins deux bornes de connexion électrique et, d'autre part, le boîtier électrique comporte, intérieurement, au moins un moyen de séparation d'au moins deux fils dont l'un coopère avec l'une des bornes de connexion électrique d'un tel bornier de connexion électrique tandis que l'autre coopère avec l'autre borne de connexion électrique de ce bornier de connexion électrique.

Encore une autre caractéristique consiste en ce que le boîtier électrique comporte au moins un ensemble qui comporte, chacun, d'une part, ledit au moins un bornier de connexion électrique ou au moins l'un desdits borniers de connexion électrique, un tel bornier de connexion électrique comportant, chacun, au moins deux bornes de connexion électrique et, d'autre part, au moins un élément, qui est, chacun, associé à un tel bornier de connexion électrique, et qui comporte, chacun, au moins un moyen de séparation d'au moins deux fils dont l'un coopère avec l'une des bornes de connexion électrique d'un tel bornier de connexion électrique tandis que l'autre coopère avec l'autre borne de connexion électrique de ce bornier de connexion électrique.

Une caractéristique additionnelle concerne le fait que ledit au moins un élément comporte, chacun, d'une part, une première partie qui est rendue solidaire d'une plaque que comporte intérieurement le boîtier électrique et de laquelle ledit au moins un bornier de connexion électrique est rendu solidaire et, d'autre part, une deuxième partie, qui s'étend à partir de la première partie, et qui comporte ledit au moins un moyen de guidage et/ou ledit au moins un moyen de séparation.

Encore une autre caractéristique concerne le fait que le boîtier électrique comporte au moins un moyen d'indication de l'état de fonctionnement du coffret électrique et/ou d'au moins un module électrique que contient ce coffret électrique.

Une autre caractéristique consiste en ce que le boîtier électrique comporte un portillon de fermeture de ce boîtier, ce portillon de fermeture comportant des moyens de maintien d'au moins un document.

De plus, le coffret électrique comporte, encore, d'une part, un support de pose comportant au moins un moyen de réception d'un organe de fixation de ce support de pose sur une structure et, d'autre part, au moins un moyen d'assemblage du boîtier électrique avec le support de pose. Ce support de pose comporte, d'une part, au moins un cadre comportant au moins quatre côtés, d'autre part, au moins une ouverture traversante délimitée par le cadre et, d'autre part encore, au moins un passage de câble, que comporte au moins un des côtés du cadre, et qui débouche au moins à l'intérieur de l'ouverture traversante.

Ainsi, le coffret électrique selon l'invention comporte un boîtier électrique qui comporte, intérieurement, d'une part, au moins un bornier de connexion électrique qui comporte, chacun, au moins une borne de connexion électrique et, d'autre part, au moins un moyen de guidage d'au moins un fil électrique en direction de la borne de connexion électrique ou de l'une des bornes de connexion électrique d'un tel bornier de connexion électrique.

Cette caractéristique permet, avantageusement, de faciliter le positionnement d'au moins un fil électrique par rapport à la borne de connexion électrique ou à l'une des bornes de connexion électrique d'un bornier de connexion électrique ainsi que l'engagement d'au moins un tel fil électrique à l'intérieur d'une telle borne de connexion électrique.

Le coffret électrique comporte, aussi, intérieurement, au moins un moyen de séparation d'au moins deux fils dont l'un coopère avec l'une des bornes de connexion électrique d'un tel bornier de connexion électrique tandis que l'autre coopère avec l'autre borne de connexion électrique de ce bornier de connexion électrique, ceci lorsque ledit bornier de connexion électrique comporte au moins deux bornes de connexion électrique. La présence d'un tel moyen de séparation évite, avantageusement, tout contact entre deux fils électriques, positionnés côte à côte, et chacun associé à une borne de connexion électrique différente d'un même bornier de connexion électrique, et permet, en particulier, d'empêcher tout court-circuit, ceci aussi bien lors de la mise en place d'au moins un tel fil électrique dans une telle borne de connexion électrique que lors du retrait d'un tel fil électrique hors d'une telle borne de connexion électrique.

Le coffret électrique comporte, encore, d'une part, un support de pose comportant au moins un moyen de réception d'un organe de fixation de ce support de pose sur une structure et, d'autre part, au moins un moyen d'assemblage du boîtier électrique avec le support de pose. Cette caractéristique permet, avantageusement, de fixer, tout d'abord, uniquement le support de pose sur une structure, ceci de manière aisée. Ensuite seulement, le boîtier électrique de ce coffret est rapporté sur ce support de pose et assemblé avec ce support de pose. L'installation d'un coffret électrique conforme à l'invention est, ainsi, considérablement facilitée.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :

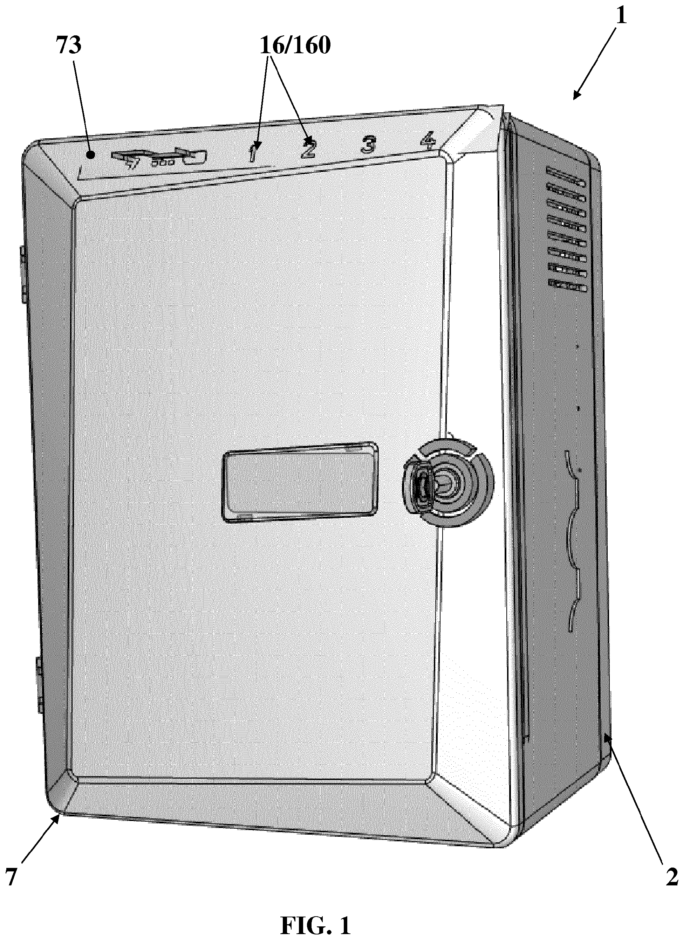

- la figure 1 est une vue schématisée et en perspective d'un coffret électrique conforme à l'invention ;
- la figure 2 est une vue schématisée et en perspective d'un support de pose que comporte le coffret électrique selon l'invention ;
- la figure 3 est une vue schématisée et en perspective correspondant à un détail du support de pose illustré figure 2 ;
- la figure 4 est une vue schématisée et en perspective d'une partie du boîtier électrique que comporte le coffret électrique selon l'invention ;

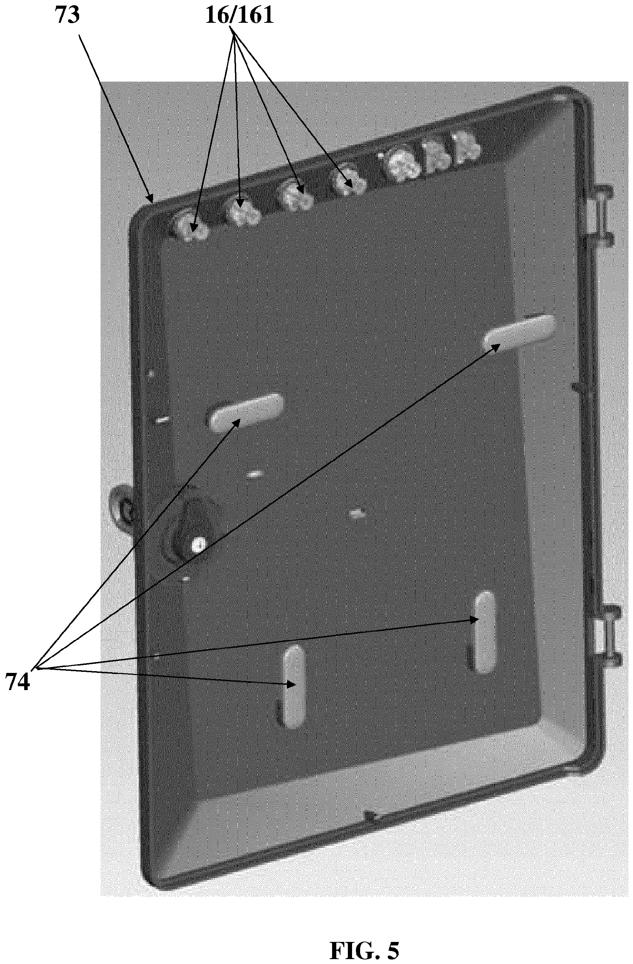

- la figure 5 est une vue schématisée et en perspective d'un portillon que comporte le boîtier électrique du coffret électrique ;
- la figure 6 est une vue schématisée et en perspective d'un module électrique que comporte intérieurement le boîtier électrique du coffret électrique selon l'invention ;
- la figure 7 est une vue schématisée et en perspective d'un détail d'un ensemble, qui comporte au moins un bornier et un élément, et que comporte un module électrique illustré figure 6.

La présente invention concerne le domaine de la fabrication des coffrets électriques destinés à être raccordés à un câble électrique d'un réseau électrique d'alimentation en énergie électrique, ceci pour son alimentation en énergie électrique. Ces coffrets électriques sont, aussi, destinés à être raccordés à des câbles électriques d'une installation électrique, ceci pour l'alimentation en énergie électrique de prises électriques et/ou de dispositifs électriques.

Un tel coffret électrique est destiné à être rendu solidaire d'une structure, plus particulièrement constituée par un mur ou analogue.

Tel que visible sur les figures en annexe, le coffret électrique 1 comporte un support de pose 2 qui est destiné à être rendu solidaire d'une telle structure.

Ce support de pose 2 comporte, alors, au moins un moyen de réception (3, 3a, 3b, 3a', 3b') d'un organe de fixation (non représenté mais pouvant adopter la forme d'une vis ou analogue) pour la fixation de ce support de pose 2 sur ladite structure.

Un tel moyen de réception (3, 3a, 3b, 3a', 3b') adopte, de préférence, la forme d'un orifice traversant.

En fait, ce support de pose 2 présente une partie supérieure 20 qui comporte au moins un tel moyen de réception (3, 3a, 3b) d'un tel organe de fixation.

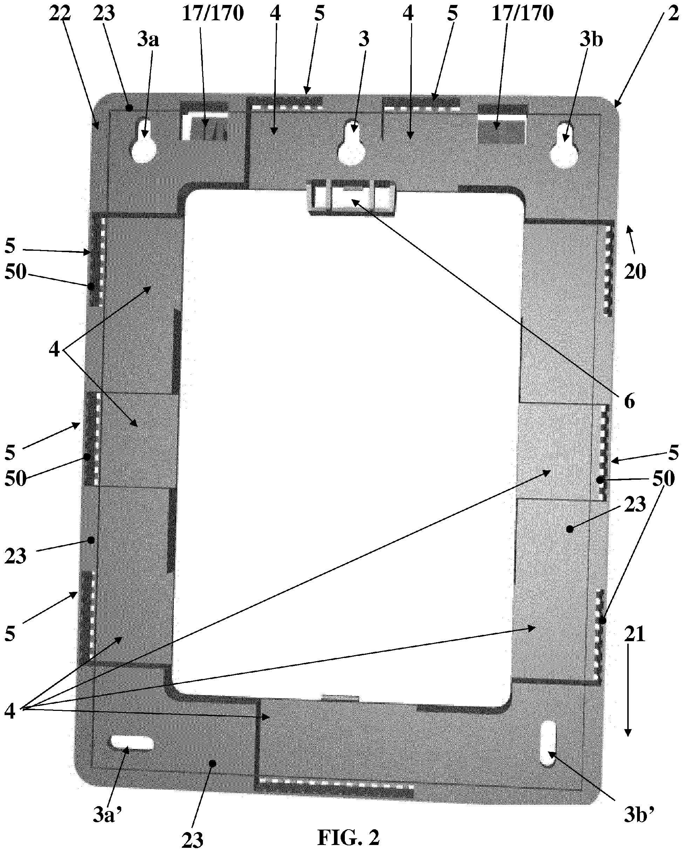

Tel que visible sur la figure 2, la partie supérieure 20 de ce support de pose 2 peut, alors, comporter un moyen de réception 3 adoptant la forme d'un orifice traversant et centré par rapport à cette partie supérieure 20. Un tel moyen de réception 3 permet de suspendre provisoirement le support de pose 2 sur la structure, ceci en attente d'une fixation définitive.

Tel que visible sur cette même figure 2, cette partie supérieure 20 du support de pose 2 peut, encore, comporter au moins un autre moyen de réception (3a, 3b) localisé latéralement par rapport au moyen de réception centré 3, plus particulièrement deux autres moyens de réception (3a, 3b) situés de part et d'autre de ce moyen de réception centré 3.

Ce support de pose 2 comporte, également, une partie inférieure 21 qui comporte, de préférence, au moins un autre moyen de réception (3a' ; 3b') d'un organe de fixation.

Un tel autre moyen de réception (3a', 3b') adopte la forme d'un orifice traversant, de préférence de forme oblongue.

En fait, la partie inférieure 21 de ce support de pose 2 comporte, de préférence, deux autres moyens de réception (3a' ; 3b') adoptant, chacun, la forme d'un orifice traversant de forme oblongue.

L'orifice oblong de l'un 3a' de ces deux autres moyens de réception (3a', 3b') s'étend selon une direction perpendiculaire à la direction selon laquelle s'étend l'orifice oblong de l'autre 3b' de ces deux autres moyens de réception (3a' ; 3b').

La présence de ce ou ces autres moyens de réception (3a' ; 3b'), que comporte la partie inférieure 21 du support de pose 2, permet, avantageusement, de fixer ce support de pose 2 dans une position appropriée et définitive, ceci après que ce support de pose 2 ait été préalablement suspendu par l'intermédiaire d'un organe de fixation coopérant avec le moyen de réception 3 (ou avec l'un des moyens de réception 3, 3a, 3b) que comporte la partie supérieure 20 de ce support de pose 2.

Une autre caractéristique consiste en ce que le support de pose 2 comporte, d'une part, au moins un cadre 22 comportant au moins quatre côtés 23 et, d'autre part, au moins une ouverture traversante 24 délimitée par ledit cadre 22, plus particulièrement par les côtés 23 de ce cadre 22.

A ce propos, on observera que c'est, plus particulièrement, les côtés 23 de ce cadre 22 qui comportent les moyens de réception (3, 3a, 3b ; 3a', 3b') susmentionnés.

En fait, la partie supérieure 20 du support de pose 2 comporte un côté supérieur qui comporte le ou les moyens de réception (3, 3a, 3b) tandis que la partie inférieure de 21 de ce support de pose 2 comporte le ou les autres moyens de réception (3a', 3b').

Une autre caractéristique du coffret électrique 1 consiste en ce que son support de pose 2 comporte encore au moins un passage de câble 4 qui débouche au moins à l'intérieur de l'ouverture traversante 24 de ce support de pose 2.

A ce propos, on observera que c'est, plus particulièrement, au moins un des quatre côtés 23 du cadre 22 de ce support de pose 2 qui comporte au moins un tel passage de câble 4.

En fait, au moins un des quatre côtés 23 de ce cadre 22 comporte, dans son épaisseur, au moins un passage de câble 4 (voire une pluralité de passages de câble 4) qui débouche au moins à l'intérieur de l'ouverture traversante 24.

Selon un mode de réalisation préféré plusieurs de ces quatre côtés 23 du cadre 22 comportent, chacun, au moins un passage de câble 4, voire (et de préférence) plusieurs passages de câble 4, qui débouche (nt) au moins à l'intérieur de l'ouverture traversante 24.

En fait, un tel passage de câble 4 est constitué par un canal que comporte un tel côté 23 du cadre 22, ceci dans son épaisseur.

La présence d'un tel passage de câble 4 permet, avantageusement, de positionner au moins un tel câble de manière appropriée par rapport à ce support de pose 2 et, ainsi, par rapport au coffret électrique 1 et à la structure sur laquelle ce coffret électrique 1 est rapporté.

Une autre caractéristique concerne le fait que le support de pose 2 comporte au moins un moyen d'occultation 5 dudit au moins un passage de câble 4.

Une telle caractéristique permet, avantageusement et lorsqu'un tel passage de câble 4 n'est pas utilisé pour faire passer un ou plusieurs câbles, d'occulter la présence d'un tel passage de câble 4.

En fait, ce support de pose 2 comporte une pluralité de moyens d'occultation 5, chacun configuré pour occulter l'un des passages de câble 4 que comporte le support de pose 2.

Selon un mode de réalisation préféré, ledit au moins un moyen d'occultation 5 est constitué par une portion d'une paroi latérale (plus particulièrement d'une paroi latérale externe) que comporte le cadre 22 du support de pose 2, plus particulièrement un des côtés 23 de ce cadre 22.

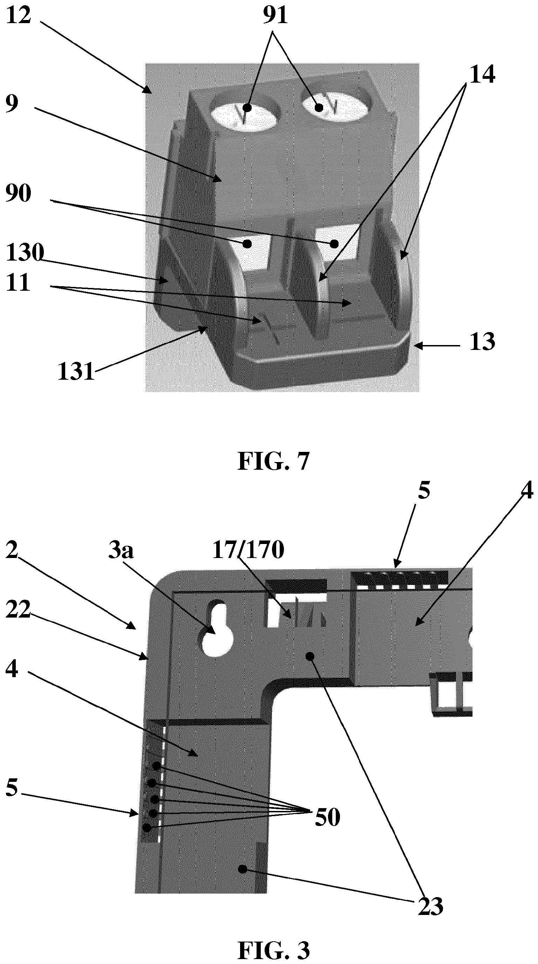

Tel que visible sur les figures 2 et 3, ledit au moins un moyen d'occultation 5 comporte une pluralité de segments sécables 50, plus particulièrement individuellement sécables.

La présence de ces segments sécables 50 permet, avantageusement et en découpant un ou plusieurs de ces segments 50, d'ajuster la taille de l'ouverture pratiquée dans le moyen d'occultation 5 à la taille du ou des câbles traversant le passage de câble 4 initialement occulté par ce moyen d'occultation 5.

Une autre caractéristique du support de pose 2 consiste en ce qu'il comporte au moins un niveau à bulle 6.

La présence de ce niveau à bulle 6 permet, avantageusement, de positionner le support de pose 2 de manière appropriée par rapport à une structure, plus particulièrement à l'aide d'un organe de fixation que reçoit un moyen de réception 3 susmentionné et avant de fixer ce support de pose 2 de manière définitive avec un autre organe de fixation que reçoit un autre moyen de réception (3a', 3b') susmentionné.

C'est, notamment, la partie supérieure 20 du support de pose 2 (plus particulièrement un côté supérieur du cadre 22 que comporte cette partie supérieure 20) qui comporte, alors, un tel niveau à bulle 6.

Une autre caractéristique consiste en ce que le coffret électrique 1 comporte un boîtier électrique 7 destiné à contenir au moins un module électrique 8, notamment comportant un transformateur ou autre.

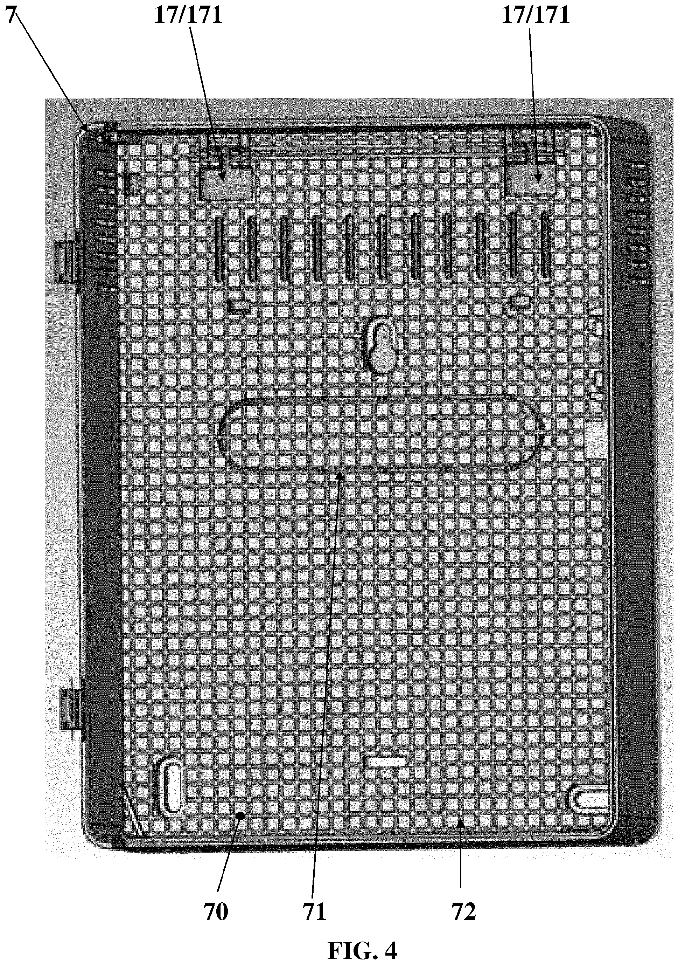

Tel que visible sur la figure 4, ce boîtier électrique 7 comporte un fond 70 qui comporte au moins une portion prédécoupée 71.

Cette portion prédécoupée 71 permet, avantageusement, en retirant cette portion prédécoupée 71, d'autoriser le passage d'au moins câble au travers du fond 70 du boîtier 7, ceci pour raccorder ledit au moins un module électrique 8, selon le cas, au réseau électrique d'alimentation en énergie électrique, à au moins une prise électrique, ou à au moins un dispositif électrique.

Encore une autre caractéristique concerne le fait que le fond 70 dudit boîtier électrique 7 comporte au moins un moyen de positionnement 72 d'un accessoire (par exemple un rail DIN ou autre) à l'intérieur de ce boîtier électrique 7 et par rapport à ce fond 70, donc par rapport au boîtier électrique 7.

Tel que visible sur la figure 4, un tel moyen de positionnement 72 adopte la forme d'un quadrillage intégré dans la structure du fond 70 du boîtier électrique 7.

Encore une autre caractéristique du boîtier électrique 7 concerne le fait qu'il comporte un portillon de fermeture 73 de ce boîtier 7, ce portillon de fermeture 73 comportant (plus particulièrement du côté interne orienté en direction du fond 70 du boîtier 7) des moyens de maintien 74 d'au moins un document.

De tels moyens de maintien 74 adoptent la forme d'au moins une patte ou d'au moins un clip solidaire du portillon 73, plus particulièrement de la paroi interne du portillon 73.

Une autre caractéristique concerne le fait que le boîtier électrique 7 comporte, intérieurement, au moins un bornier de connexion électrique 9 qui comporte, chacun, au moins une borne de connexion électrique 90.

Une telle borne de connexion électrique 90 s'étend, de préférence, selon une direction verticale, ceci en position de service du coffret électrique 1. En fait, une telle borne de connexion électrique 90 comporte un logement pour la réception d'au moins un fil électrique, un tel logement s'étendant, alors, selon une direction verticale, ceci en position de service du coffret électrique 1.

Un tel bornier de connexion électrique 9 comporte, également, au moins un moyen d'immobilisation 91, chacun associé à une telle borne de connexion électrique 90, et chacun conçu pour immobiliser au moins un fil électrique à l'intérieur d'une telle borne de connexion électrique 90. Un tel moyen d'immobilisation 91 est, de préférence, constitué par une vis ou un organe d'immobilisation qui s'étend selon une direction horizontale et/ou qui est mobile selon une telle direction horizontale, ceci en position de service du coffret électrique 1.

Tel que mentionné ci-dessus, le boîtier électrique 7 est destiné à contenir au moins un module électrique 8.

A ce propos, on observera que ce boîtier électrique 7 comporte, alors, intérieurement, au moins un tel module électrique 8. C'est, plus particulièrement, ledit au moins un module électrique 8 qui comporte, alors, chacun, ledit au moins un bornier de connexion électrique 9 ou au moins l'un des borniers de connexion électrique 9.

Encore une autre caractéristique concerne le fait que le boîtier électrique 7 comporte, intérieurement, au moins un passe-fil 10 qui est associé, chacun, à au moins un tel bornier de connexion électrique 9. A ce propos, on observera que c'est, alors, plus particulièrement, ledit au moins un module électrique 8 qui comporte, chacun, ledit au moins un passe-fil 10 ou au moins l'un des passe-fil 10.

La présence d'un tel passe-fil 10 permet, avantageusement, une parfaite distribution du ou des fils électriques au(x) bornier(s) de connexion électrique 9 et rend l'installation parfaitement propre.

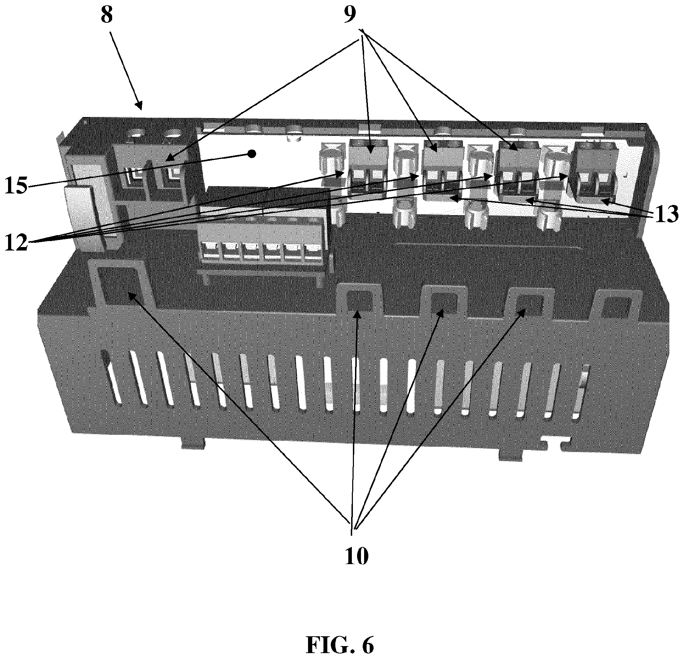

Selon un mode de réalisation préféré illustré figure 6, ce boîtier électrique 7 comporte, en fait, au moins un module électrique 8 qui comporte, de préférence, chacun, une pluralité de borniers de connexion électrique 9 ainsi qu'une pluralité de passes-fil 10, chacun associé à un tel bornier de connexion électrique 9.

Encore une autre caractéristique consiste en ce que le boîtier électrique 7 comporte, intérieurement, au moins un moyen de guidage 11 d'au moins un fil électrique en direction de la borne 90 ou de l'une des bornes 90 d'un tel bornier de connexion électrique 9.

La présence d'un tel moyen de guidage 11 permet, avantageusement, de guider le ou les fils électriques en vue et au moment de son/leur introduction dans le bornier de connexion électrique 9, ceci en direction de la borne de connexion électrique 90 ou de l'une des bornes de connexion électrique 90 d'un tel bornier de connexion 9.

En fait, c'est, plus particulièrement, un module électrique 8 tel que susmentionné qui comporte au moins un tel bornier de connexion 9 ainsi qu'au moins un tel moyen de guidage 11.

De manière particulière, ce boîtier électrique 7 (plus particulièrement un module électrique 8 que comporte ce boîtier électrique 7) comporte, intérieurement, d'une part, au moins un bornier de connexion électrique 9 qui comporte, chacun, plusieurs bornes de connexion électrique 90 et, d'autre part, plusieurs moyens de guidage 11, chacun pour le guidage d'au moins un fil électrique en direction de l'une des bornes de connexion électrique 90 d'un tel bornier de connexion électrique 9.

Une autre caractéristique concerne le fait que le boîtier électrique 7 comporte au moins un ensemble 12 qui comporte, chacun, d'une part, ledit au moins un bornier de connexion électrique 9 ou au moins l'un desdits borniers de connexion électrique 9 et, d'autre part, au moins un élément 13, qui est, chacun, associé à un tel bornier de connexion électrique 9 (plus particulièrement en étant adossé à un tel bornier de connexion électrique 9), et qui comporte, chacun, ledit au moins un moyen de guidage 11 ou au moins l'un desdits moyens de guidage 11 d'au moins un fil électrique en direction de la borne de connexion électrique 90 ou de l'une des bornes de connexion électrique 90 d'un tel bornier de connexion électrique 9.

C'est, plus particulièrement ledit au moins un module électrique 8 qui comporte, alors, un tel ensemble 12.

Tel que visible figure 7, un tel ensemble 12 peut, alors, comporter, d'une part, un bornier de connexion électrique 9 qui comporte une pluralité de bornes de connexion électrique 90 et, d'autre part, un élément 13, qui est associé à un tel bornier de connexion électrique 9, et qui comporte plusieurs moyens de guidage 11 d'au moins un fil électrique chacun en direction de l'une des bornes de connexion électrique 90 d'un tel bornier de connexion électrique 9.

Dans un tel ensemble 12, ledit au moins un moyen de guidage 11 est surmonté par ledit bornier de connexion électrique 9 qui est positionné à l'aplomb d'au moins un tel moyen de guidage 11, ceci en position de service du coffret électrique 1. Plus particulièrement, ledit au moins un moyen de guidage 11 est surmonté, chacun, par la borne de connexion électrique 90 ou par au moins une des bornes de connexion électrique 90 dudit bornier de connexion électrique 9. Une telle borne de connexion électrique 90 est, alors, positionnée à l'aplomb d'un tel moyen de guidage 11, ceci en position de service du coffret électrique 1.

Tel que visible sur la figure 7, ledit au moins un moyen de guidage 11 comporte, chacun, un canal de guidage, qui s'étend en aval de ladite borne de connexion électrique 90 ou de l'une des bornes de connexion électrique 90 d'un tel bornier de connexion électrique 9, et qui débouche en regard d'une telle borne de connexion électrique 90, ceci en position de service du coffret électrique 1.

En fait, ce canal de guidage s'étend de manière verticale, plus particulièrement selon un axe vertical, ceci en position de service du coffret électrique 1.

On observera qu'un tel canal de guidage comporte, d'une part, un fond de guidage et, d'autre part, au moins une paroi latérale de guidage (notamment, et de préférence, une paire de parois latérales de guidage parallèles) qui s'étend à partir du fond de guidage (notamment de manière perpendiculaire au fond de guidage).

En fait, le fond de guidage et ladite au moins une paroi latérale de guidage s'étendent de manière verticale, ceci en position de service du coffret électrique 1.

C'est, plus particulièrement, ledit au moins un élément 13 qui comporte un tel canal de guidage.

Tel que mentionné ci-dessus, ledit au moins un bornier de connexion électrique 9 (plus particulièrement constitué par un bornier de connexion 9 que comporte un module électrique 8 tel que susmentionné) comporte, chacun, au moins deux bornes de connexion électrique 90.

Le boîtier électrique 7 comporte, alors, intérieurement, au moins un moyen de séparation 14 d'au moins deux fils dont l'un coopère avec l'une des bornes de connexion électrique 90 d'un tel bornier de connexion électrique 9 tandis que l'autre coopère avec l'autre borne de connexion électrique 90 de ce bornier de connexion électrique 9.

La présence d'un tel moyen de séparation 14 évite, avantageusement, tout contact entre deux fils électriques, positionnés côte à côte, et chacun associé à une borne différente, et permet, en particulier, d'empêcher tout court-circuit .

Tel que mentionné ci-dessus, le boîtier électrique 7 comporte au moins un ensemble 12 qui comporte, chacun, ledit au moins un bornier de connexion électrique 9 ou au moins l'un desdits borniers de connexion électrique 9, un tel bornier de connexion électrique 9 comportant, chacun, au moins deux bornes de connexion électrique 90.

Ledit ensemble 12 comporte, alors, également, au moins un élément 13, qui est, chacun, associé à un tel bornier de connexion électrique 9 (plus particulièrement en étant adossé à un tel bornier de connexion électrique 9), et qui comporte, chacun, au moins un moyen de séparation 14 d'au moins deux fils dont l'un coopère avec l'une 90 des bornes de connexion électrique 90 d'un tel bornier de connexion électrique 9 tandis que l'autre coopère avec l'autre borne de connexion électrique 90 de ce bornier de connexion électrique 9.

Dans un tel ensemble 12, ledit au moins un moyen de séparation 14 est surmonté par ledit bornier de connexion électrique 9 qui est positionné à l'aplomb d'un tel moyen de séparation 14, ceci en position de service du coffret électrique 1. Plus particulièrement, ledit au moins un moyen de séparation 14 est positionné entre les deux bornes de connexion électrique 90 d'un tel bornier de connexion électrique 9.

Ledit au moins un élément 13 (qui comporte ledit au moins un moyen de séparation 14) est, de préférence, constitué par ledit au moins un élément 13, qui est mentionné ci-dessus, et qui comporte ledit au moins un moyen de guidage 11.

En ce qui concerne ledit au moins un moyen de séparation 14, celui-ci comporte, chacun, une paroi de séparation, associée à un tel bornier de connexion électrique 9, et interposée entre les deux bornes de connexion électrique 90 d'un tel bornier de connexion 9, ceci comme visible figure 7.

En fait, une telle paroi de séparation s'étend en aval dudit bornier de connexion électrique 9 et/ou de manière verticale, ceci en position de service du coffret électrique 1.

De plus, une telle paroi de séparation est parallèle à ladite au moins une paroi latérale de guidage que comporte le canal de guidage que comporte ledit au moins un moyen de guidage 11 mentionné ci-dessus.

Une autre caractéristique concerne le fait que ledit au moins un élément 13 comporte, chacun, d'une part, une première partie 130 qui est rendue solidaire d'une plaque 15 que comporte intérieurement le boîtier électrique 7 (plus particulièrement, que comporte ledit au moins un module électrique 8 et/ou qui est constituée par une carte électronique) et de laquelle ledit au moins un bornier de connexion électrique 9 est, également, rendu solidaire et, d'autre part, une deuxième partie 131, qui s'étend à partir de la première partie 130, et qui comporte ledit au moins un moyen de guidage 11 et/ou ledit au moins un moyen de séparation 14.

En fait, ledit au moins un élément 13 adopte la forme d'une pièce en forme de « L » et comporte, d'une part, une première aile qui constitue ladite première partie 130 et, d'autre part, une deuxième aile, qui constitue la deuxième partie 131, et qui est, de préférence, adossée audit bornier de connexion électrique 9.

Cette première aile s'étend selon une première direction (notamment horizontale en position de service du coffret électrique 1) tandis que cette deuxième aile s'étend selon une deuxième direction (notamment verticale en position de service du coffret électrique 1) perpendiculaire à la première direction selon laquelle s'étend la première aile.

Ladite deuxième aile comporte le canal de guidage, plus particulièrement le fond de guidage d'un tel canal de guidage.

Ladite au moins une paroi latérale de guidage et/ou ladite paroi de séparation s'étend à partir de ladite deuxième aile, notamment de manière perpendiculaire à cette deuxième aile.

Une caractéristique additionnelle concerne le fait que le boîtier électrique 7 comporte au moins un moyen d'indication 16 de l'état de fonctionnement du coffret électrique 1 et/ou d'au moins un module électrique 8 que contient ce coffret électrique 1.

En fait, un tel moyen d'indication 16 comporte, d'une part, au moins un élément transparent ou translucide 160 qui s'étend au travers de la paroi du boîtier électrique 7 (plus particulièrement du portillon de fermeture 73 que comporte ce boîtier électrique 7) et, d'autre part, au moins un moyen d'éclairage 161, chacun associé à un tel élément transparent ou translucide 160, positionné à l'intérieur du boîtier 7 et à l'arrière d'un tel élément transparent ou translucide 160.

Un tel moyen d'indication 16 permet, avantageusement, de donner une indication de l'état de fonctionnement, ceci en façade du coffret électrique 1, plus particulièrement en façade du boîtier électrique 7 de ce coffret 1.

De plus, le positionnement du ou des moyens d'éclairage 161 permet, avantageusement, un rétro-éclairage du ou des éléments transparents ou translucides 160.

En fait, ce ou ces éléments transparents ou translucides 160 peuvent adopter la forme d'un symbole, notamment un symbole électrique (symbole de courant électrique, de courant continu, de courant alternatif, de batterie ou autre).

Finalement, le coffret électrique 1 comporte au moins un moyen d'assemblage 17 du boîtier électrique 7 avec le support de pose 2.

Tel que visible sur les figures 2 à 4, un tel moyen d'assemblage 17 comporte, d'une part, un moyen de clipage 170 (notamment sous la forme d'une languette ou analogue, par exemple pourvue d'un crochet d'accrochage) que comporte le support de pose 2 et, d'autre part, un moyen de clipage complémentaire 171 (notamment sous forme d'une ouverture conçue pour coopérer avec la languette ou analogue) que comporte le boîtier électrique 7.

## Revendications

1. Coffret électrique (1) comportant un boîtier électrique (7), qui est destiné à contenir au moins un module électrique (8), et qui comporte, intérieurement, d'une part, au moins un bornier de connexion électrique (9) qui comporte, chacun, au moins une borne de connexion électrique (90) et, d'autre part, au moins un moyen de guidage (11) d'au moins un fil électrique en direction de la borne de connexion électrique (90) ou de l'une (90) des bornes de connexion électrique (90) d'un tel bornier de connexion électrique (9).

2. Coffret électrique (1) selon la revendication 1, **caractérisé par le fait que** le boîtier électrique (7) comporte au moins un ensemble (12) qui comporte, chacun, d'une part, ledit au moins un bornier de connexion électrique (9) ou au moins l'un desdits borniers de connexion électrique (9) et, d'autre part, au moins un élément (13), qui est, chacun, associé à un tel bornier de connexion électrique (9), et qui comporte, chacun, ledit au moins un moyen de guidage (11) ou au moins l'un desdits moyens de guidage (11) d'au moins un fil électrique en direction de la borne de connexion électrique (90) ou de l'une des bornes de connexion électrique (90) d'un tel bornier de connexion électrique (9).

3. Coffret électrique (1) selon l'une quelconque des revendications précédentes, **caractérisé par le fait que** ledit au moins un moyen de guidage (11) d'au moins un fil électrique comporte, chacun, un canal de guidage, qui s'étend en aval de ladite borne de connexion électrique (90) ou de l'une des bornes de connexion électrique (90) d'un tel bornier de connexion électrique (90), et qui débouche en regard d'une telle borne de connexion électrique (90).

4. Coffret électrique (1) selon l'une quelconque des revendications précédentes, **caractérisé par le fait que**, d'une part, ledit au moins un bornier de connexion électrique (9) comporte, chacun, au moins deux bornes de connexion électrique (90) et, d'autre part, le boîtier électrique (7) comporte, intérieurement, au moins un moyen de séparation (14) d'au moins deux fils dont l'un coopère avec l'une (90) des bornes de connexion électrique (90) d'un tel bornier de connexion électrique (9) tandis que l'autre coopère avec l'autre borne de connexion électrique (90) de ce bornier de connexion électrique (9) .

5. Coffret électrique (1) selon l'une quelconque des revendications 1 à 3, **caractérisé par le fait que** le boîtier électrique (7) comporte au moins un ensemble (12) qui comporte, chacun, d'une part, ledit au moins un bornier de connexion électrique (9) ou au moins l'un desdits borniers de connexion électrique (9), un tel bornier de connexion électrique (9) comportant, chacun, au moins deux bornes de connexion électrique (90) et, d'autre part, au moins un élément (13), qui est, chacun, associé à un tel bornier de connexion électrique (9), et qui comporte, chacun, au moins un moyen de séparation (14) d'au moins deux fils dont l'un coopère avec l'une (90) des bornes de connexion électrique (90) d'un tel bornier de connexion électrique (9) tandis que l'autre coopère avec l'autre borne de connexion électrique (90) de ce bornier de connexion électrique (9) .

6. Coffret électrique (1) selon l'une quelconque des revendications 4 ou 5, **caractérisé par le fait que** ledit au moins un moyen de séparation (14) comporte, chacun, une paroi de séparation, qui s'étend en aval dudit bornier de connexion électrique (9), et qui est interposée entre les deux bornes de connexion électrique (90) d'un tel bornier de connexion électrique (9).

7. Coffret électrique (1) selon l'une quelconque des revendications 3 ou 5, **caractérisé par le fait que** ledit au moins un élément (13) comporte, chacun, d'une part, une première partie (130) qui est rendue solidaire d'une plaque (15) que comporte intérieurement le boîtier électrique (7) et de laquelle ledit au moins un bornier de connexion électrique (9) est rendu solidaire et, d'autre part, une deuxième partie (131), qui s'étend à partir de la première partie (130), et qui comporte ledit au moins un moyen de guidage (11) et/ou ledit au moins un moyen de séparation (14).

8. Coffret électrique (1) selon la revendication 7, **caractérisé par le fait que** ledit au moins un élément (13) adopte la forme d'une pièce en forme de « L » et comporte, d'une part, une première aile qui constitue ladite première partie (130) et, d'autre part, une deuxième aile qui constitue la deuxième partie (131).

9. Coffret électrique (1) selon l'une quelconque des revendications précédentes, **caractérisé par le fait que** le boîtier électrique (7) comporte, intérieurement, au moins un passe-fil (10) qui est associé, chacun, audit bornier de connexion électrique (9) ou à au moins un desdits borniers de connexion électrique (9).

10. Coffret électrique (1) selon l'une quelconque des revendications précédentes, **caractérisé par le fait que** le boîtier électrique (7) comporte au moins un moyen d'indication (16) de l'état de fonctionnement du coffret électrique (1) et/ou d'au moins un module électrique (8) que contient ce coffret électrique (1).

11. Coffret électrique (1) selon l'une quelconque des revendications précédentes, **caractérisé par le fait que** le boîtier électrique (7) comporte un fond (70) qui comporte au moins une portion prédécoupée (71) et/ou au moins un moyen de positionnement (72) d'un accessoire à l'intérieur de ce boîtier électrique (7) et par rapport à ce fond (70).

12. Coffret électrique (1) selon l'une quelconque des revendications précédentes, **caractérisé par le fait que** le boîtier électrique (7) comporte un portillon de fermeture (73) de ce boîtier (7), ce portillon de fermeture (73) comportant des moyens de maintien (74) d'au moins un document.

13. Coffret électrique (1) selon l'une quelconque des revendications précédentes, **caractérisé par le fait qu'**il comporte, encore, d'une part, un support de pose (2) comportant au moins un moyen de réception (3, 3a, 3b, 3a', 3b') d'un organe de fixation de ce support de pose (2) sur une structure et, d'autre part, au moins un moyen d'assemblage (10) du boîtier électrique (7) avec le support de pose (2).

14. Coffret électrique (1) selon la revendication 13, **caractérisé par le fait que** le support de pose (2) comporte, d'une part, au moins un cadre (22) comportant au moins quatre côtés (23), d'autre part, au moins une ouverture traversante (24) délimitée par le cadre (22) et, d'autre part encore, au moins un passage de câble (4), que comporte au moins un des côtés (23) du cadre (22), et qui débouche au moins à l'intérieur de l'ouverture traversante (24).

15. Coffret électrique (1) selon la revendication 14, **caractérisé par le fait que** le support de pose (2) comporte au moins un moyen d'occultation (5) dudit au moins un passage de câble (4), ledit au moins un moyen d'occultation (5) étant constitué par une portion d'une paroi latérale que comporte le cadre (22) du support de pose (2) et/ou comportant une pluralité de segments sécables (50).
